# EUROPEAN PATENT APPLICATION

(11) **EP 2 899 508 A1**
(43) Date of publication of application: **29.07.2015**
(21) Application number: 15151351.2
(22) Date of filing: 15.01.2015
(51) Int. Cl.: G01C 23/00, G08G 5/00, G01C 5/00

(54) **A system and method for graphically displaying intruder incorrect barometric setting**

(30) Priority: 24.01.2014 US 201414163263
(71) Applicant: Honeywell International Inc., Morristown, NJ 07962-2245 (US)
(72) Inventor: Samuthirapandian, Subash, Morristown, NJ 07962-2245 (US); Johnson, Markus Alan, Morristown, NJ 07962-2245 (US); A, Fazurudheen, Morristown, NJ 07962-2245 (US)
(74) Representative: Houghton, Mark Phillip

(57) **Abstract**

Presented herein is a system and method for graphically displaying intruder aircraft symbology on an avionics display system onboard a host aircraft. The method comprises receiving data from the intruder aircraft, determining the reference altitude of the intruder aircraft, displaying intruder symbology on the display, and generating symbology on the display to visually distinguish the intruder symbology when the barosetting of the intruder is not substantially equal to the barosetting of the host aircraft.

## Description

### TECHNICAL FIELD

Embodiments of the subject matter described herein relate generally to avionics display systems. More particularly, embodiments of the subject matter described herein relate to a system and method for graphically identifying and displaying intruder aircraft having an incorrect reference pressure altimeter setting.

### BACKGROUND

Barometric altitude is determined as a function of a reference pressure and the external air pressure. The pilot sets the reference pressure (i.e. the barosetting) using a rotatable knob or some other input device. The reference pressure may be provided by Air Traffic Control (ATC), a terminal radar approach control facility, a flight service station, or a ground station. Unfortunately, the pilot of an aircraft (e.g. an intruder aircraft) may incorrectly set the reference pressure.

There are several causes that result in the setting of an incorrect reference pressure. For example, there may be a miscommunication between the pilot and ATC. Additionally, pilots that fly international flights confront different standards in (1) altitude measurement using different units (e.g. feet vs. meters); (2) altitude reference setting using different units (e.g. hectoPascal or inches of mercury; (3) environmental conditions such as rapid atmospheric pressure changes; and the like. Errors in setting the reference pressure may also be caused by (1) high workload; (2) deviation from normal task sharing; (3) interruptions and distractions (4) absence of effective cross-check and backup among crewmembers; (5) incomplete briefings (e.g. failure to discuss applicable altimeter-setting units and the country practice for fixed or variable transition altitudes/levels; (6) language difficulties; and the like. If an aircraft relies on an incorrect intruder altitude to achieve a proper vertical separation standard, a potential conflict could result between the host aircraft and the intruder.

In view of the forgoing, it would be desirable to provide a system and method for detecting and graphically distinguishing on a display intruder aircraft having an incorrect barometric setting, thus alerting the crew of the host aircraft to exercise caution in the vicinity of the intruder.

### BRIEF SUMMARY

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

A method is provided for displaying intruder aircraft symbology on an avionics display system onboard a host aircraft. The method comprises receiving data from the intruder aircraft, determining the altitude of the intruder aircraft, displaying intruder symbology on the display, and generating symbology on the display to visually distinguish the intruder symbology when the barosetting of the intruder is substantially different from the barosetting of the host aircraft.

Also provided is a method for visually distinguishing intruder aircraft symbology when the intruder aircraft has an improperly set reference altitude. The method comprises receiving ADS-B data, from the intruder aircraft, on an avionics system including a display onboard a host aircraft from the intruder aircraft, determining the barosetting of the intruder aircraft, displaying the intruder aircraft on the display, and generating symbology on the display to highlight the intruder aircraft when the barosetting of the intruder aircraft differs from the barosetting of the host aircraft.

Furthermore, a system for displaying intruder aircraft symbology on an avionics display system onboard a host aircraft is provided. The system comprises a receiver for receiving intruder ADS-B data, a source of host aircraft data, and a display system for displaying symbology representative of the host aircraft and the intruder aircraft. The system also comprises a processor coupled to the receiver, the display system, and the source of host aircraft. The processor is configured to generate symbology visually distinguishing intruder aircraft on the display having a barosetting, as determined from its ADS-B data, that is greater or less than that of the host aircraft.

### BRIEF DESCRIPTION OF THE DRAWINGS

Other desirable features and characteristics will become apparent from the following detailed description and the appended claims taken in conjunction with this background and the accompanying drawings, in which:
FIG. 1 is a block diagram of an information display system suitable for use in an aircraft in accordance with an embodiment;
FIG. 2 is an exemplary top-down visual display that may be rendered by the aircraft display system of FIG. 1;
FIGS. 3-6 illustrate of additional embodiments of how certain intruders on a display may be visually distinguished from other intruders; and
FIG. 7 is a flowchart of a method for graphically distinguishing intruder aircraft that have a barosetting substantially different from that of the host aircraft in accordance with an exemplary embodiment.

### DETAILED DESCRIPTION

The following detailed description is merely exemplary in nature and is not intended to limit the subject matter of the application and uses thereof. Furthermore, there is no intention to be bound by any theory presented in the preceding background or the following detailed description. Presented herein for purposes of explication are certain exemplary embodiments of how traffic information, particularly that associated with intruder aircraft, may be graphically displayed in a readily comprehendible manner. It should be appreciated that these explicated example embodiments are merely examples and guides for implementing the novel display system and method for graphically displaying traffic information symbology. As such, the examples presented herein are intended as non-limiting.

Techniques and technologies may be described herein in terms of functional and/or logical block components and with reference to symbolic representations of operations, processing tasks, and functions that may be performed by various computing components or devices. It should be appreciated that any number of hardware, software, and/or firmware components configured to perform the specified functions may realize the various block components shown in the figures. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

The following description may refer to elements or nodes or features being "coupled" together. As used herein, unless expressly stated otherwise, "coupled" means that one element/node/feature is directly or indirectly joined to (or directly or indirectly communicates with) another element/node/feature, and not necessarily mechanically. Thus, although the drawings may depict one exemplary arrangement of elements, additional intervening elements, devices, features, or components may be present in an embodiment of the depicted subject matter. In addition, certain terminology may also be used in the following description for the purpose of reference only, and thus are not intended to be limiting.

For the sake of brevity, conventional techniques related to graphics and image processing, navigation, flight planning, aircraft controls, and other functional aspects of the systems (and the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in an embodiment of the subject matter.

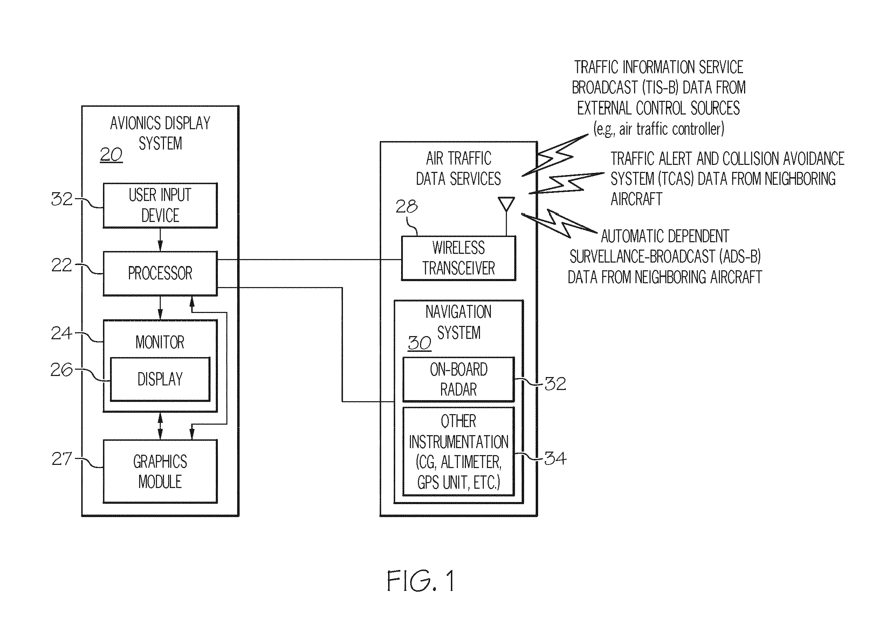

FIG. 1 depicts an exemplary embodiment of an aircraft display system **100**. In an exemplary embodiment, the display system **100** includes, without limitation, a display module **102** for displaying a graphical flight plan image **103**, a navigation system **104**, a traffic information module **105,** a communications system **106,** a flight management system (FMS) **108,** a processor **112,** a graphics module **114,** a user interface **110,** and a database **116** including a symbology database suitably configured to support operation of the graphics module **114** and display module **102,** as described in greater detail below. Navigation system **104** may include an inertial reference system **118,** a navigation database **120** and one or more wireless tranceivers **122** for receiving navigational data such as Traffic Information Service Broadcast (TIS-B) data, Traffic Alert and Collision Avoidance System (TCAS) data, and Automatic Dependent Surveillance-Broadcast (ADS-B) data from external sources in the well-known manner.

It should be understood that FIG. 1 is a simplified representation of a display system 100 for purposes of explanation and ease of description and is not intended to limit the application or scope of the subject matter in any way. In practice, the display system **100** and/or the aircraft will include numerous other devices and components for providing additional functions and features, as will be appreciated in the art. For example, the display system **100** and/or the aircraft may include one or more avionics systems (e.g., an air traffic management system, a radar system, a traffic avoidance system) coupled to the flight management system **108** and/or the processor **112** for obtaining and/or providing real-time flight-related information that may be displayed on the display module **102**.

Image-generating devices suitable for use as display module **102** may include various analog (e.g., cathode ray tube) and digital (e.g., liquid crystal, active matrix, plasma, etc.) display modules. In certain embodiments, display module **102** may assume the form of a Head-Down Display (HDD) or a Head-Up Display (HUD) included within an aircraft's Electronic Flight Instrument System (EFIS). Display module **102** may be disposed at various locations throughout the cockpit. For example, display module **102** may comprise a primary flight display (PFD) and reside at a central location within the pilot's primary field-of-view. Alternately, display module **102** may comprise a secondary flight deck display, such as an Engine Instrument and Crew Advisory System (EICAS) display, mounted at a location for convenient observation by the aircraft crew but that generally resides outside of the pilot's primary field-of-view. In still further embodiments, display module **102** may be worn by one or more members of the flight crew.

In an exemplary embodiment, display module **102** is coupled to the graphics module **114,** and graphics module **114** is coupled to the processor **112**. Processor **112** and the graphics module **114** are cooperatively configured to display, render, or otherwise convey graphical representations or images of traffic information symbols on the display module **102.** As stated previously, navigational system **104** includes an inertial reference system **118,** a navigation database **120,** one or more antennas **107** and at least one wireless transceiver **122.** Inertial reference system **118** and wireless receiver **122** provide processor **112** with navigational information derived from sources onboard and external to the host aircraft, respectively. More specifically, inertial reference system **118** provides processor **112** with information describing various flight parameters of the host aircraft (e.g., position, orientation, velocity, etc.) as monitored by a number of motion sensors (e.g., accelerometers, gyroscopes, etc.) deployed onboard the aircraft. By comparison, and as indicated in FIG. 1, wireless receiver **122** receives navigational information from various sources external to the aircraft. These sources may include various types of navigational aids (e.g., global position systems, non-directional radio beacons, very high frequency omni-directional radio range devices (VORs), etc.), ground-based navigational facilities (e.g., Air Traffic Control Centers, Terminal Radar Approach Control Facilities, Flight Service Stations, and control towers), and ground-based guidance systems (e.g., instrument landing systems). Wireless receiver **122** also receives Automatic Dependent Surveillance-Broadcast (ADS-B), Traffic Alert and Collision Avoidance system (TCAS), and Traffic Information Service Broadcast (TIS-B) data from neighboring aircraft. In a specific implementation, wireless receiver **122** assumes the form of a multi-mode receiver (MMR) having global navigational satellite system capabilities.

ADS-B, which consists of two different services, "ADS-B Out" and "ADS-B In", will be replacing radar as the primary surveillance method for controlling aircraft worldwide. In the United States, ADS-B is an integral component of the NextGen national airspace strategy for upgrading or enhancing aviation infrastructure and operations. The ADS-B system can also provide traffic and government generated graphical weather information through TIS-B and Flight Information Service-Broadcast (FIS-B) applications. ADS-B enhances safety by making an aircraft visible, in real time, to ATC and to other appropriately equipped ADS-B aircraft with position and velocity data transmitted every second. ADS-B data can be recorded and downloaded for post-flight analysis. ADS-B also provides the data infrastructure for inexpensive flight tracking, planning, and dispatch. "ADS-B Out" periodically broadcasts information about each aircraft, such as identification, current position, altitude, and velocity, through an onboard transmitter. ADS-B Out provides air traffic controllers with real-time position information that is, in most cases, more accurate than the information available with current radar-based systems. "ADS-B In" is the reception by aircraft of FIS-B and TIS-B data and other ADS-B data such as direct communication from nearby aircraft. The ADS-B data is received by wireless receiver 122, and this data then is parsed into individual parts such as, Flight ID, location, bearing, altitude, and the like.

With continued reference to Fig. 1, wireless transceiver **122** may receive Traffic Information Services-Broadcast (TIS-B) data from external control sources, such as satellite and various ground-based facilities including Air Traffic Control Centers, Terminal Radar Approach Control Facilities, Flight Service Stations, control towers, and the like. TIS-B data, ADS-B data, and other such external source data is preferably formatted to include air traffic state vector information, which may be utilized to determine a neighboring aircraft's current position and velocity. Furthermore, in accordance with embodiments of the present invention, the TIS-B data and/or the ADS-B may also be formatted to include additional information useful in determining other flight characteristics of the neighboring aircraft.

TCAS is an airborne system that detects and tracks aircraft (i.e. intruder aircraft) near a host aircraft (i.e. the ownship). A TCAS system includes a processor (e.g. processor **112**), antennas (e.g antenna **107**), a traffic display such as is shown at **103** (e.g. a lateral map display, a vertical simulation display, etc.), and control means, such as is shown in FIG. 1. The system tracks intruder aircraft by interrogating their transponders and tracking them on a display. Processor **112** analyzes the transponder replies to determine range, bearing, and relative altitude. If the system determines that a potential hazard exists, it issues visual and aural advisories to the crew. The visual advisories take the form of symbols on the one or more traffic displays and identifies the relative threat of each intruder by various symbols and colors. The intruder's altitude relative to that of the host aircraft is displayed and annunciated, and a trend arrow is used to indicate if the intruder is climbing or descending. In this manner, the system may determine the range between the host aircraft and the intruder, the relative bearing to the intruder, the altitude and vertical speed to the intruder, and the closing rate between the intruder and the host aircraft.

Navigation database **120** includes various types of navigation-related data stored therein. In a preferred embodiment, navigation database **120** is an onboard database that is carried by the aircraft. The navigation-related data includes various flight plan related data such as, for example, and without limitation: locational data for geographical waypoints; distances between waypoints; track between waypoints; data related to different airports; navigational aids; obstructions; special use airspace; political boundaries; communication frequencies; and aircraft approach information. The navigation system **104** is also configured to obtain one or more navigational parameters associated with operation of the aircraft. The navigation system **104** may be realized as a global positioning system (GPS), inertial reference system (IRS), or a radio-based navigation system (e.g., VHF Omni-directional radio range (VOR) or long range aid to navigation (LORAN), and may include one or more navigational radios or other sensors suitably configured to support operation of the navigation system **104,** as will be appreciated in the art. In an exemplary embodiment, the navigation system **104** is capable of obtaining and/or determining the instantaneous position of the aircraft, that is, the current location of the aircraft (e.g., the latitude and longitude) and the altitude or above ground level for the aircraft. The navigation system **104** may also obtain and/or determine the heading of the aircraft (i.e., the direction the aircraft is traveling in relative to some reference).

Processor **112** is coupled to the navigation system **104** for obtaining real-time navigational data and/or information regarding operation of the aircraft to support operation of the display system **100**. The communications system **106** is also coupled to the processor **112** and configured to support communications to and/or from the aircraft, as is appreciated in the art. The processor **112** is coupled to the flight management system **108,** which in turn, may also be coupled to the navigation system **104** and the communications system **106** for providing real-time data and/or information regarding operation of the aircraft to the processor **112** to support operation of the aircraft. In addition, a traffic information module **105** is coupled to the processor **112,** and utilizes ADS-B, TIS-B, and TCAS data gathered from the wireless transceiver **122** to graphically generate symbology that represents the surrounding aircraft and their associated traffic information. Furthermore, the user interface **110** is coupled to the processor **112,** and the user interface **110** and the processor **112** are cooperatively configured to allow a user to interact with display module **102** and other elements of display system **100,** as described in greater detail below.

In an exemplary embodiment, the display module **102** is realized as an electronic display configured to graphically display traffic information, weather information, and/or other data associated with operation of the aircraft under control of the graphics module **114**. In an exemplary embodiment, the display module **102** is located within a cockpit of the aircraft. It will be appreciated that although FIG. 1 shows a single display module **102,** in practice, additional display modules may be present onboard the aircraft. The user interface **110** is also located within the cockpit of the aircraft and adapted to allow a user (e.g., pilot, co-pilot, or crew member) to interact with the remainder of display system **100** and enables a user to select content displayed on the display module **102,** as described in greater detail below. In various embodiments, the user interface **110** may be realized as a keypad, touchpad, keyboard, mouse, touch screen, joystick, knob, microphone, or another suitable device adapted to receive input from a user. In preferred embodiments, user interface **110** may be a touch screen, cursor control device, joystick, or the like.

In an exemplary embodiment, the communications system **106** is suitably configured to support communications between the aircraft and another aircraft or ground location (e.g., air traffic control). In this regard, the communications system **106** may be realized using a radio communication system or another suitable data link system. In an exemplary embodiment, the flight management system **108** (or, alternatively, a flight management computer) is located onboard the aircraft. Although FIG. 1 is a simplified representation of display system **100,** in practice, the flight management system **108** may be coupled to one or more additional modules or components as necessary to support navigation, flight planning, and other aircraft control functions in a conventional manner.

The processor **112** and/or graphics module **114** are configured in an exemplary embodiment to display and/or render symbology on the display module **102** that is representative of the flight information. This allows a user (e.g., via user interface **110**) to gain a better understanding of the surrounding aircraft. The processor **112** generally represents the hardware, software, and/or firmware components configured to facilitate the display and/or rendering of a navigational map on the display module **102** and perform additional tasks and/or functions described in greater detail below. Depending on the embodiment, the processor **112** may be implemented or realized with a general purpose processor, a content addressable memory, a digital signal processor, an application specific integrated circuit, a field programmable gate array, any suitable programmable logic device, discrete gate or transistor logic, discrete hardware components, or any combination thereof, designed to perform the functions described herein. The processor **112** may also be implemented as a combination of computing devices, e.g., a combination of a digital signal processor and a microprocessor, a plurality of microprocessors, one or more microprocessors in conjunction with a digital signal processor core, or any other such configuration. In practice, the processor **112** includes processing logic that may be configured to carry out the functions, techniques, and processing tasks associated with the operation of the display system **100,** as described in greater detail below. Furthermore, the steps of a method or algorithm described in connection with the embodiments disclosed herein may be embodied directly in hardware, in firmware, in a software module executed by the processor **112,** or in any practical combination thereof.

The graphics module **114** generally represents the hardware, software, and/or firmware components configured to control the display and/or rendering of a navigational map on the display module **102** and perform additional tasks and/or functions described in greater detail below. In an exemplary embodiment, the graphics module **114** accesses one or more databases **116** including a symbology database **115** suitably configured to support operations of the graphics module **114,** as described below. In this regard, the database **116** may comprise a symbology database, a waypoint database, required navigation performance (RNP) database, terrain database, a weather database, a flight plan database, an obstacle database, a navigational database, a geopolitical database, a terminal airspace database, a special use airspace database, or other information for rendering and/or displaying content on the display module **102,** as described below. It will be appreciated that although FIG. 1 shows a single database **116** for purposes of explanation and ease of description, in practice, numerous databases will likely be present in a practical embodiment of the display system **100.**

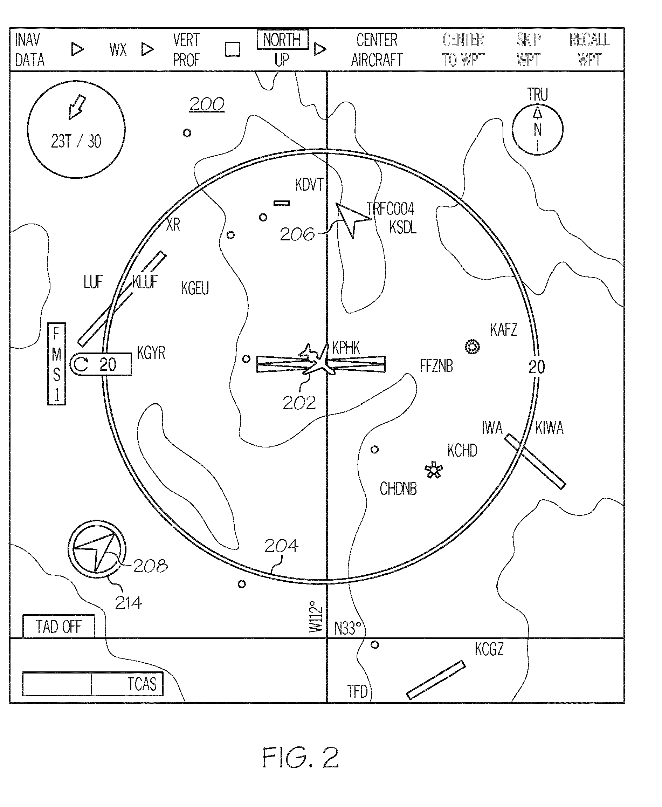

FIG. 2 is an exemplary top-down visual display **200** that may be rendered by the aircraft display system **102** of FIG. 1. Aircraft symbology within a display radius is graphically rendered on the display, as shown on the exemplary visual display **200.** The display radius is the rendered geographic area around the host aircraft **202** measured in nautical miles (nm). The pilot may set the display radius by zooming into display a smaller geographic area or zooming out to display a larger geographic area. However, it should be appreciated that the display radius will be set to a default setting, which can be adjusted to the desired range as required. FIG. 2 includes a range-ring **204** delineating a distance of twenty nautical miles from host aircraft **202.**

Also displayed in FIG. 2 are intruder aircraft symbols **206** and **208.** In the case of intruder **206,** its reference altitude (i.e. barosetting) is substantially the same as that of host aircraft **202,** as it should be; e.g. no more than several hundred feet difference. This is determined from ADS-B OUT data transmitted from aircraft **206** and received and processed at host aircraft **202.**

However, it was determined that the reference altitude of intruder aircraft **208** is unacceptably different from that of host aircraft **202** (greater than 200 -300 feet) due to an incorrect reference pressure setting. Thus, in accordance with an embodiment, intruder aircraft symbol **208** is highlighted and graphically distinguished from other aircraft, such as intruder aircraft symbology (e.g. symbology **206**). In the case of FIG. 2, intruder aircraft **208** is highlighted and visually distinguished by displaying symbology corresponding to circles **210** and **212** forming a ring **214** around intruder aircraft symbol **208.** In this manner, a crew-member viewing display **200** will be alerted to exercise caution in the vicinity of the aircraft represented by symbol **208** because its barosetting or reference altitude was incorrectly set. Thus, the minimum vertical separation standards for aircraft operating in the vicinity of each other have not been met.

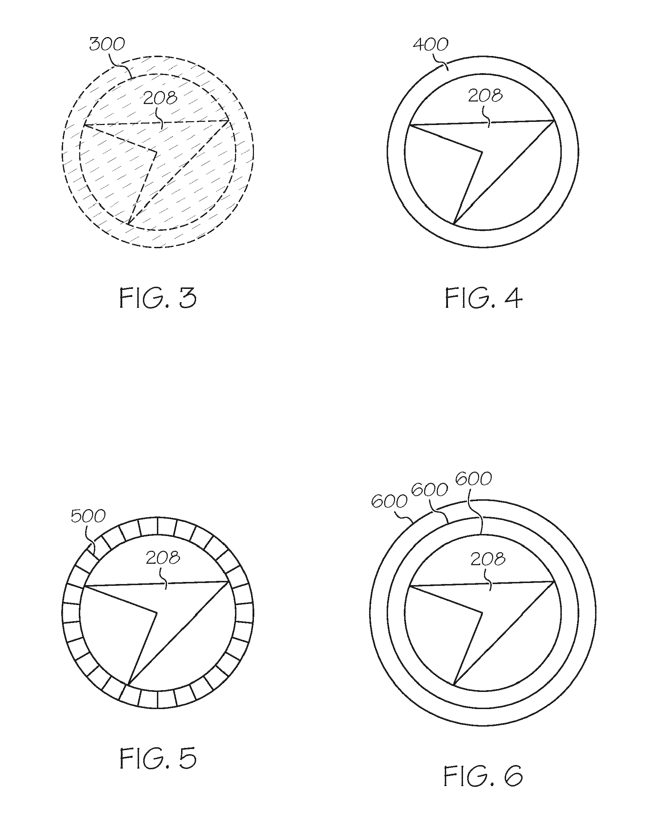

It should be emphasized that there are numerous ways to highlight and/or visually distinguish intruder aircraft symbology **208**. For example, referring to FIG. 3, intruder **208** may be distinguished by a translucent overlay **300.** Overlay **300** may be circular as shown or may be of a different desired shape (e.g. square, triangular, etc.) and/or color. In FIG. 4, intruder symbol may be highlighted by a surrounding region **400.** Region **400** may take the form of a ring as shown or any other desirable shape or color. In addition, ring **400** may include a plurality of radial spoke sections **500** as shown in FIG. 5. Furthermore and as shown in FIG. 6, intruder **208** may be visually distinguished by a plurality of concentric circles **600** as shown in Fig. 6 of the same or different colors.

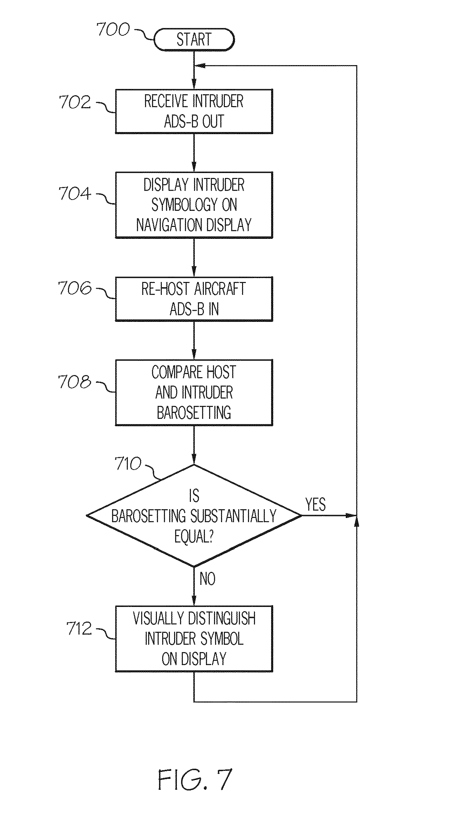

FIG. 7 is a flowchart **700** of a method for graphically distinguishing intruder aircraft that have a barosetting substantially different from that of the host aircraft (**202** in FIG. 2) in accordance with an exemplary embodiment. In **STEP 702,** the host aircraft **202** receives ADS-B data from intruder aircraft (e.g. **208**). Intruder 208 symbology is then displayed on the navigation display (FIG. 2)(**STEP 704**). In **STEP 706,** host aircraft **202** ADS-B data is retrieved, and in **STEP 708,** processor **112** in FIG. 1 compares the barosetting of intruder **208** with that of host aircraft **202.** If the barosetting of host aircraft **202** and that of intruder **208** are substantially equal, no further action is taken. If, on the other hand, the barosetting of host aircraft **202** and that of intruder **208** are not substantially equal, the displayed intruder symbol is visually and graphically highlighted on the display as previously described.

Thus, there has been provided a system and method for graphically displaying intruder aircraft symbology on an avionics display system onboard a host aircraft. The method comprises receiving data from the intruder aircraft, determining the reference altitude of the intruder aircraft, displaying intruder symbology on the display, and generating symbology on the display to visually distinguish the intruder symbology when the barosetting of the intruder is not substantially equal to the barosetting of the host aircraft.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for displaying intruder aircraft symbology on an avionics display system onboard a host aircraft, the method comprising:
receiving data from the intruder aircraft;
displaying intruder symbology on the display;
determining the barosetting of the intruder aircraft; and
generating symbology on the display to visually distinguish the intruder symbology when the barosetting of the intruder is not substantially equal to the barosetting of the host aircraft.

2. The method of Claim 1 wherein the barosetting of the intruder aircraft is determined onboard the host aircraft from ADS-B data transmitted from the intruder.

3. The method of Claim 1 wherein the intruder symbology is visually distinguished when the barosetting of the intruder is less than the barosetting of the host aircraft by at least a first predetermined amount.

4. The method of Claim 1 wherein the intruder symbology is visually distinguished when the altitude of the intruder is greater than the barosetting of the host aircraft by at least a second predetermined amount.

5. The method of Claim 1 wherein the intruder symbology is visually distinguished by displaying a circle around the intruder aircraft symbol.

6. The method of Claim 1 wherein the intruder symbology is visually distinguished by displaying a plurality of concentric circles around the intruder aircraft symbol.

7. The method of Claim 1 wherein the intruder symbology is visually distinguished by displaying first and second concentric circles around the intruder aircraft symbol to form a band around the intruder aircraft symbol.

8. The method of Claim 7 further comprising radially extending line segments within the band.

9. The method of Claim 7 further comprising a region within the band visually distinguished by color.

10. The method of Claim 1 wherein the intruder symbology is visually distinguished by displaying a translucent region overlaying the intruder symbology.
